# EUROPÄISCHE PATENTSCHRIFT

(11) **EP 4 053 663 B1**
(45) Veröffentlichungstag und Bekanntmachung des Hinweises auf die Patenterteilung: **02.04.2025**
(21) Anmeldenummer: 22157888.3
(22) Anmeldetag: 22.02.2022
(51) Int. Cl.: G05D 1/244, G05D 1/249, G05D 1/646, G05D 1/698, B66F 9/06, B66F 9/075, G05D 105/28, G05D 107/70, G05D 109/10, G05D 111/10, G06V 10/22

(54) **VERFAHREN ZUM KALIBRIEREN VON KOORDINATENSYSTEMEN IN FLURFÖRDERZEUGEN**
METHOD FOR CALIBRATING COORDINATE SYSTEMS IN INDUSTRIAL TRUCKS
PROCÉDÉ D'ÉTALONNAGE DES SYSTÈMES DE COORDONNÉES DANS LES CHARIOTS DE MANUTENTION

(30) Priorität: 02.03.2021 DE 102021104920
(43) Veröffentlichungstag der Anmeldung: 07.09.2022
(73) Patentinhaber: Jungheinrich Aktiengesellschaft, 22047 Hamburg (DE)
(72) Erfinder: Weichselgartner, Felix, 84184 Tiefenbach (DE); Moritz, Hannes, 84036 Landshut (DE); Schwaiger, Martin, 82490 Farchant (DE)
(74) Vertreter: Weickmann & Weickmann PartmbB

(56) Entgegenhaltungen:
- EP-A1- 3 950 566
- WO-A1-2020/165638
- WO-A1-2020/199471
- DE-A1- 102019 204 661
- JP-A- 2021 030 371
- US-A1- 2020 264 625
- US-A1- 2021 060 795

## Beschreibung

Die vorliegende Erfindung betrifft ganz allgemein Verbesserungen bei Verfahren zum Kalibrieren von Koordinatensystemen in Flurförderzeugen, insbesondere automatisierten Flurförderzeugen.

Automatisierte Flurförderzeuge umfassen in der Regel eine Vielzahl von Sensoren, um in einer Logistikeinrichtung in einem vorbestimmten Rahmen autark navigieren zu können. Um sicherzustellen, dass gegebene Positionen in solchen Einrichtungen für das jeweilige Fahrzeug mit einer ausreichenden Präzision reproduzierbar angefahren werden können, ist es notwendig, die intern von den Fahrzeugen für ihre Navigation verwendeten Koordinatensysteme zu kalibrieren.

Hierbei ist es aus dem Stand der Technik bekannt, derartige Kalibrierungsvorgänge für individuelle Fahrzeuge einzeln manuell durchzuführen. Das bedeutet in der Praxis, dass die entsprechenden Fahrzeuge automatisiert zu einem vorgegebenen Punkt in der Einrichtung navigieren und die Abweichung der tatsächlich von dem Fahrzeug erreichten räumlichen Position von der gewünschten räumlichen Position händisch von einem Bediener vermessen wird. Anschließend wird diese Abweichung als Offset oder Korrekturgröße in der Steuereinheit des entsprechenden Fahrzeugs als Korrektur des internen Koordinatensystems hinterlegt und dieser Prozess iterativ so lange wiederholt, bis eine vorgegebene gewünschte Präzision für das entsprechende Fahrzeug bei derartigen Vorgängen erreicht worden ist.

Beispiele für Kalibrationsverfahren im Zusammenhang mit Robotersystemen sind aus der JP 2021 030 371 A und der WO 2020/199 471 A1 bekannt. Ferner sei der Vollständigkeit halber ebenfalls auf die WO 2020/165 638 A1 und die US 2020/264 625 A1 verwiesen.

Hierbei zeigt sich jedoch, dass in dieser Weise manuell durchgeführte Kalibrierungsvorgänge relativ aufwendig sind und einen großen Bedarf an entsprechend geschultem Personal mit sich bringen, da mehrmals eine präzise Vermessung eines Abstands zwischen einer erwarteten und einer tatsächlichen Position sowie eine anschließende Eingabe der entsprechenden Daten notwendig ist. Hierbei können selbstverständlich Eingabe-, Mess- und/oder Bedienfehler auftreten, die zu weiteren Ineffizienzen während des Kalibrierungsvorgangs führen können.

Es ist daher die Aufgabe der vorliegenden Erfindung, einen erhöhten Automatisierungsgrad bei derartigen Kalibrierungsvorgängen zu erreichen und damit effizientere und weniger fehleranfällige Abläufe in Kalibrationsverfahren von Koordinatensystemen von automatisierten Flurförderzeugen zu etablieren.

Zu diesem Zweck umfasst ein weiter unten noch zu diskutierendes Verfahren zum Kalibrieren eines Koordinatensystems eines automatisierten Flurförderzeugs die Schritte eines Bereitstellens eines unkalibrierten Koordinatensystems für das Flurförderzeug, ein Versehen des Flurförderzeugs mit einer visuellen Markierung an einer vorbestimmten Position und ein Positionieren einer optischen Kamera an einer vorbestimmten Kameraposition außerhalb des Flurförderzeugs oder eines Anbringens einer visuellen Markierung an einer vorbestimmen festen Raumposition außerhalb des Flurförderzeugs und eines Positionierens einer optischen Kamera an einer vorbestimmten Kameraposition an dem Flurförderzeug, eines Durchlaufens eines vorbestimmten Bewegungsablaufs durch das Flurförderzeug, um über eine angestrebte Bahnkurve zu einem angestrebten räumlichen Zielzustand zu gelangen, anhand des unkalibrierten Koordinatensystems, eines Aufnehmens der visuellen Markierung an dem Flurförderzeug mittels der von dem Flurförderzeugs entfernten optischen Kamera oder eines Aufnehmens der außerhalb des Flurförderzeugs angeordneten visuellen Markierung mittels der an dem Flurförderzeug angeordneten optischen Kamera, um die tatsächliche Bahnkurve und/oder den tatsächlichen räumlichen Zustand des Flurförderzeugs zu bestimmen, eines Vergleichens des bestimmen räumlichen Zustands des Flurförderzeugs mit dem angestrebten räumlichen Zustand und/oder der bestimmten Bahnkurve mit der angestrebten Bahnkurve und eines Kalibrierens des Koordinatensystems des Flurförderzeugs anhand des Ergebnisses dieses Vergleichs.

Indem somit erfindungsgemäß in einer automatisierten Weise mittels einer visuellen Markierung ein Bewegungsvektor des Flurförderzeugs oder wenigstens einer beweglichen Komponente davon durch den Raum und/oder wenigstens ein Raumpunkt in Form des angestrebten räumlichen Zielzustands automatisiert mittels einer optischen Kamera vermessen und die derart erhaltenen Daten automatisiert zur Kalibrierung des Koordinatensystems des Flurförderzeugs weiterverarbeitet werden, werden manuelle Vermessungsvorgänge zur Kalibrierung des entsprechenden Koordinatensystems überflüssig, wodurch eine Steigerung der Effizienz des Verfahrens erzielt wird und mögliche Bedienerfehler von vornherein ausgeschlossen werden.

Hierbei kann die angestrebte Bahnkurve von einem Ausgangspunkt zu einem angestrebten Zielpunkt über einen im Wesentlichen beliebig definierbaren Weg verlaufen, andererseits könnte die Bahnkurve jedoch auch allein durch eine Zielposition definiert sein, sodass das entsprechende Flurförderzeug anhand seiner Fähigkeit zum automatisierten Betrieb beispielsweise einen kürzesten möglichen Weg zu dieser Zielposition berechnen und anschließend befahren kann. In jedem Fall wird dann die entsprechende Bahnkurve durch das zu kalibrierende Flurförderzeug autonom anhand des momentan verwendeten Koordinatensystems durchfahren und mittels der wenigstens einen optischen Kamera der vektorielle Verlauf der visuellen Markierung durch den Raum oder die Endposition als Zielzustand aufgenommen und anschließend ausgewertet.

In diesem Zusammenhang versteht es sich, dass auch mehrere Kameras verwendbar sind, beispielsweise um gleichzeitig eine Mehrzahl von optischen Markierungen an einem einzelnen Flurförderzeug aufzunehmen oder um zusätzliche Informationen hinsichtlich weiterer Freiheitsgrade erhalten zu können, wie beispielsweise mittels einer einzelnen Kamera schwer ableitbare Tiefeninformation oder auch Informationen zu Rotationsfreiheitsgraden oder eine laterale Position in zwei Dimensionen.

Des Weiteren bietet die Verwendung mehrerer optischer Kameras die Möglichkeit, eine Bahnkurve der optischen Markierung über einen größeren Raumbereich zu verfolgen. Letztlich muss jedoch der Typ der wenigstens einen verwendeten Kamera lediglich auf die wenigstens eine visuelle Markierung und die mittels des Verfahrens abzuleitenden Daten abgestimmt sein, sodass beispielsweise auch der Einsatz von 3D-Kameras, beispielsweise mit TOF(Time of Flight)-Sensoren, oder auch von Infrarot-Kameras denkbar ist, sofern die optischen Markierungen von diesen Kameras mit der gewünschten Präzision erfassbar sind. Der Vorteil einer Verwendung von im sichtbaren Bereich angesiedelten visuellen Markierungen und arbeitenden Kameras besteht jedoch stets darin, dass sämtliche Abläufe leichter durch menschliche Bediener nachvollziehbar und überwachbar sind.

Weiterhin soll festgehalten sein, dass das erfindungsgemäße Verfahren nicht nur erlaubt, lokal auf Flurförderzeugen gespeicherte Koordinatensysteme zu kalibrieren, sondern dass entsprechende Korrekturdaten oder Offsets auch auf einer externen Instanz gespeichert oder hinterlegt werden können, beispielweise auf einer zentralen Verwaltungseinheit. In solchen Ausführungsformen können dann unterschiedliche Flurförderzeug entsprechend ihren jeweiligen Korrekturdaten unterschiedliche Koordinaten zum Anfahren desselben Ortes im Rahmen von Steueranweisungen von der zentralen Verwaltungseinheit erhalten.

Zur weiteren Verbesserung der Präzision des erfindungsgemäßen Verfahrens kann dieses ferner ein aufeinanderfolgendes Anfahren einer Mehrzahl von angestrebten räumlichen Zielzuständen durch das Flurförderzeug oder ein mehrmaliges Anfahren desselben räumlichen Zielzustands, ein jeweiliges Bestimmen des tatsächlichen räumlichen Zustands des Flurförderzeugs mittels der optischen Kamera, ein jeweiliges Vergleichen des bestimmten tatsächlichen räumlichen Zielzustands des Flurförderzeugs mit dem angestrebten räumlichen Zielzustand und ein Kalibrieren des Koordinatensystems des Flurförderzeugs anhand der Ergebnisse der Vergleiche umfassen.

Auf diese Weise können mehrere unabhängige Datensätze zur Verbesserung des Kalibrierungsergebnisses aufgenommen werden, die entweder in einer iterativen Weise eines Kalibrierens anhand der jeweiligen aufeinanderfolgenden Vergleiche und/oder einer, ggf. gewichteten, Mittelwertbildung zwischen den jeweiligen aufeinanderfolgenden Vergleichen zur Kalibrierung des Koordinatensystems des entsprechenden Fahrzeugs herangezogen werden können.

Hierbei kann die Anzahl von angestrebten räumlichen Zielzuständen oder von Wiederholungen des mehrfachen Anfahrens desselben räumlichen Zielzustands entweder im Vornherein festgelegt werden oder beispielsweise iterativ so lange durchgeführt werden, bis keine signifikante Verbesserung des Kalibrierungsergebnisses mehr eintritt bzw. eine Schwelle bei den Beträgen der Korrekturfaktoren zwischen zwei aufeinanderfolgenden iterativen Schritten unterschritten wird.

Es betrifft die vorliegende Erfindung ein Verfahren zum Kalibrieren eines jeweiligen Koordinatensystems einer Flotte von automatisierten Flurförderzeugen mit unkalibrierten Koordinatensystemen, umfassend die Schritte eines Definierens eines Master-Fahrzeugs aus der Flotte, eines Versehens des Master-Fahrzeugs und aller weiteren Fahrzeuge der Flotte mit wenigstens einer visuellen Markierung an den Fahrzeugen, eines Durchführens eines Kalibrierens des Koordinatensystems des Master-Fahrzeugs, eines Durchlaufens eines vorbestimmten Bewegungsablaufs durch das kalibrierte Master-Fahrzeug, um über eine kalibrierte Bahnkurve zu einem kalibrierten räumlichen Zielzustand zu gelangen, eines Aufnehmens der wenigstens einen visuellen Markierung an dem Master-Fahrzeug mittels einer von dem Master-Fahrzeug entfernten optischen Kamera zum Bestimmen einer Master-Bahnkurve und/oder eines Master-Zielzustands und für jedes der weiteren Fahrzeuge der Flotte eines Durchlaufens eines vorbestimmen Bewegungsablaufs anhand des entsprechenden unkalibrierten Koordinatensystems, um die Master-Bahnkurve nachzubilden und/oder den Master-Zielzustand zu erreichen, eines Aufnehmens der wenigstens einen visuellen Markierung an dem weiteren Fahrzeug mittels einer optischen Kamera, um die tatsächliche Bahnkurve und/oder den tatsächlichen räumlichen Zustand des Fahrzeugs zu bestimmen, eines Vergleichens des bestimmten tatsächlichen räumlichen Zustands des Fahrzeugs mit dem Master-Zielzustand und/oder der tatsächlichen Bahnkurve mit der Master-Bahnkurve und eines Kalibrierens des Koordinatensystems des Fahrzeugs anhand des Ergebnisses dieses Vergleichs.

Das Verfahren gemäß der vorliegenden Erfindung beruht darauf, ein Master-Fahrzeug in einer prinzipiell beliebigen Weise, also beispielsweise auch gemäß dem zu Beginn beschriebenen Stand der Technik, zu kalibrieren, sodass dieses zunächst einen vorgegebenen räumlichen Zielpunkt als kalibrierten räumlichen Zustand anfahren kann. Indem nun analog zum ersten Aspekt der vorliegenden Erfindung sämtliche Fahrzeuge der Flotte mit wenigstens einer visuellen Markierung versehen sind, kann zunächst einmal das Master-Fahrzeug einen vorbestimmten Bewegungsablauf durchlaufen und hierbei von der wenigstens einen optischen Kamera erfasst werden. Indem nun ferner die weiteren Fahrzeuge der Flotte ebenfalls über einen entsprechenden vorbestimmen Bewegungsablauf zu dem vorbestimmen räumlichen Zielzustand gelangen, kann die Abweichung zwischen der wenigstens einen visuellen Markierung des jeweils zu kalibrierenden Fahrzeugs und der entsprechenden Markierung des Master-Fahrzeugs verglichen werden. Auf diese Weise kann anschließend für jedes der weiteren Fahrzeuge der Flotte in einer automatisierten Weise eine Kalibrierung des jeweiligen Koordinatensystems anhand der Ergebnisse dieser Vergleiche durchgeführt werden, sodass gemäß dem erfindungsgemäßen Verfahren nur noch eine individuelle Kalibration des Master-Fahrzeugs notwendig ist, während sämtliche weiteren Fahrzeuge der Flotte über die vorgegebene kalibrierte Bahnkurve bzw. den kalibrierten räumlichen Zielzustand des Master-Fahrzeugs automatisiert kalibriert werden können.

Hierbei können wenigstens einige der Fahrzeuge der Flotte von einem selben Fahrzeugtyp sein und die visuellen Markierungen an identischen Positionen daran bereitgestellt werden. Der Begriff des "identischen Fahrzeugtyps" bezieht sich in diesem Zusammenhang darauf, dass die funktionalen Komponenten der einzelnen Fahrzeuge, mit welchen letztlich die Arbeitsvorgänge auszuführen sind, welche eine Kalibrierung benötigen, in im Wesentlichen gleich ausgebildet sind. Beispielsweise können hierbei Fahrzeuge eines identischen Fahrzeugtyps im Sinne der vorliegenden Erfindung, deren Antriebssysteme zu kalibrieren sind, unterschiedliche Hubeinrichtungen aufweisen, während Fahrzeuge, deren Hubeinrichtungen zu kalibrieren sind, unterschiedliche Antriebssysteme aufweisen.

Andererseits ist das eben beschriebene erfindungsgemäßen Verfahren jedoch auch mit beliebigen Typen von Fahrzeugen innerhalb einer Flotte anwendbar, solange für die Kalibration der entsprechenden Komponenten, welche zum Durchführen der relevanten Arbeitsvorgänge benötigt werden, benötigte Daten mittels der wenigstens einen Markierung ableitbar und in Verhältnis zu der entsprechenden Markierung des Master-Fahrzeugs setzbar sind. In einem einfachen Beispiel, in welchem lediglich notwendig wäre, jeweilige Lastgabeln von ansonsten unterschiedlich aufgebauten Fahrzeugen zu einer vorbestimmten Position zu bewegen und damit zu kalibrieren, könnte demzufolge die entsprechende Markierung an der Lastgabel zur Kalibrierung vorgesehen sein, während weitere Komponenten der entsprechenden Fahrzeuge nicht beachtet werden.

Es könnte letztlich sogar die entsprechende Markierung gar nicht mehr der so betrachteten Komponente zugeordnet sein, sondern für Fahrzeuge von unterschiedlichen Typen Offsets zwischen bekannten Markierungspositionen und relevanten Komponenten hinterlegt und bei der eigentlichen Kalibration berücksichtigt werden. Ein anschauliches Beispiel hierfür sind Ladespulen in induktiv zu ladenden elektrisch betriebenen Flurförderzeugen, deren Positionen im Fahrzeugkörper in unterschiedlichen Typen von Fahrzeugen voneinander abweichen können, doch stets exakt bekannt sind. Indem nun die bekannte Position einer solchen Ladespule in ein geometrisches Verhältnis zu einer Position einer Markierung an dem Fahrzeug gesetzt wird, kann sichergestellt werden, dass nach einer durchgeführten Kalibrierung gemäß der vorliegenden Erfindung auch für unterschiedliche Typen von Fahrzeugen stets das korrekte Erreichen einer Ladeposition nach der Kalibrierung ermöglicht ist.

Hierbei sind die genannten Techniken selbstverständlich miteinander kombinierbar, so dass die Position der wenigstens einen Markierung, aus der die Lage der Ladespule abgeleitet werden kann, beispielsweise in der oben genannten Weise einer Lastgabel zugeordnet sein kann, so dass sowohl die Lastgabel als Komponente zum Aufnahmen von Lasten als auch die Ladespule von unterschiedlichen Typen von Fahrzeugen in einer Flotte mittels lediglich einer geeigneten Markierung im Bereich der Lastgaben kalibriert werden könnte.

Hierbei kann die Position der wenigstens einen optischen Kamera für das Master-Fahrzeug und sämtliche der weiteren Fahrzeuge der Flotte identisch sein, es ist jedoch prinzipiell auch möglich, dass sich die Position/en der wenigstens einen Kamera zwischen den Kalibrierungsvorgängen der einzelnen Fahrzeuge ändert. Insbesondere in diesem Fall kann es demzufolge vorteilhaft sein, wenn das Kalibrieren der weiteren Fahrzeuge der Flotte das Berechnen eines Korrekturvektors umfasst, sodass das Kalibrieren des Koordinatensystems anhand eines Kamera-Koordinatensystems stattfinden kann, mittels welchem ein globales Koordinatensystem definiert ist. Zu diesem Zweck können weitere statische visuelle Markierungen in dem Raum angeordnet sein, in welchem das Kalibrierungsverfahren stattfindet, sodass bei einer Änderung der Kameraposition zunächst einmal anhand einer Erfassung dieser statischen visuellen Markierungen das Kamera-Koordinatensystem etabliert werden kann, von welchem aus dann Rückschlüsse auf das globale Koordinatensystem gezogen werden können.

In jedem Fall kann das jeweilige Kalibrieren des Koordinatensystems der weiteren Fahrzeuge der Flotte ein mehrfaches Durchlaufen eines vorbestimmen Bewegungsablaufs und ein mehrfaches Aufnehmen der wenigstens einen visuellen Markierung sowie ein iteratives Kalibrieren anhand jeweiliger aufeinanderfolgender Vergleiche und/oder eine, ggf. gewichtete, Mittelwertbildung zwischen den jeweiligen aufeinanderfolgenden Vergleichen umfassen.

Hierbei kann es sich um ein mehrfaches Durchlaufen desselben vorbestimmten Bewegungsablaufs oder um unterschiedliche Bewegungsabläufe zur selben vorgesehenen Zielposition oder zu unterschiedlichen Zielpositionen handeln, wobei lediglich darauf zu achten ist, dass entsprechende Master-Bahnkurven bzw. Master-Zielzustände im Vorhinein bereits aufgenommen worden sind. In Analogie zu der Beschreibung weiter oben kann ferner das Durchlaufen eines vorbestimmen Bewegungsablaufs auch lediglich durch dessen Endpunkt definiert sein, wobei dann beispielsweise von einem beliebigen Startpunkt aus das entsprechende Flurförderzeug der Flotte eine eigene Route zu diesem Endpunkt errechnen und durchlaufen kann und demzufolge die Aufnahme der wenigstens einen visuellen Markierung durch die optische Kamera lediglich anhand dieses Zielzustands stattfindet, wodurch dann die Kalibrierung ermöglicht wird.

Prinzipiell kann das Kalibrieren des Koordinatensystems des Master-Fahrzeugs mittels des weiter oben bereits angesprochenen Verfahrens zum Kalibrieren eines Koordinatensystems eines Flurförderzeugs durchgeführt werden, alternativ könnte das Kalibrieren des Koordinatensystems des Master-Fahrzeugs jedoch auch ein Anfahren des räumlichen Zielzustands anhand seines unkalibrierten Koordinatensystems sowie ein Vermessen des tatsächlich erreichten Zielzustands und ein Vergleichen des tatsächlich erreichten Zielzustands mit dem angestrebten räumlichen Zielzustand in einer durch einen Bediener wenigstens teilweise manuell ausgeführten Weise umfassen. Somit sind für die Kalibrierung des Koordinatensystems des Master-Fahrzeugs unterschiedliche Automatisierungsgrade denkbar, es kann sowohl auf die hochintegrierte und automatisierte Kalibrierung gemäß dem Verfahren des ersten Aspekts der vorliegenden Erfindung zurückgegriffen werden, es ist jedoch auch eine manuelle Kalibrierung durch einen Bediener wie aus dem Stand der Technik bekannt und weiter oben beschrieben einsetzbar. In jedem Fall ist der Präzision der Kalibrierung des Master-Fahrzeugs zunächst einmal praktisch keine Grenze gesetzt, da möglicherweise limitierende Faktoren wie die Auflösung der Kamera, die Genauigkeit der Bildauswertung und die reproduzierbare Anbringung der visuellen Markierungen an den Fahrzeugen mit einer Genauigkeit durchführbar sind, die die Anforderungen an die Kalibrationsgenauigkeit der Koordinatensysteme der Fahrzeuge deutlich übersteigt.

Ferner kann bei der Kalibrierung des Master-Fahrzeugs und prinzipiell auch der weiteren Fahrzeuge der Flotte zusätzlich eine sogenannte virtuelle Kalibration umfasst sein, wobei hierbei das Kalibrieren des Koordinatensystems des Master-Fahrzeugs ein Vergleichen von Eigenschaften von Komponenten des Master-Fahrzeugs mit kalibrierten Referenzkomponenten umfassen kann und/oder wobei das Kalibrieren der Koordinatensysteme der weiteren Fahrzeuge der Flotte ein Vergleichen von Eigenschaften von Komponenten des entsprechenden Fahrzeugs mit Master-Komponenten des Master-Fahrzeugs umfassen kann. Dieser zusätzliche Kalibrierungsschritt kann in vielfältiger Weise mit den oben beschriebenen weiteren Schritten kombiniert werden und kann insbesondere bereits vor oder während der Montage des entsprechenden Fahrzeugs durchgeführt werden, um bereits eine Vorkalibration des entsprechenden Fahrzeugs vor dessen Auslieferung vorzunehmen, wenn bekannt ist, wie und in welchem Umfang sich beispielsweise Fertigungstoleranzen in einzelnen Komponenten des entsprechenden Fahrzeugs letztlich auf dessen Betriebseigenschaften auswirken.

Zuletzt betrifft die vorliegende Erfindung noch ein System zum Durchführen eines Verfahrens gemäß dem ersten oder dem zweiten Aspekt der vorliegenden Erfindung, umfassend wenigstens eine optische Kamera, eine mit der wenigstens einen optischen Kamera betriebsmäßig gekoppelte Bildverarbeitungseinheit, welche dazu eingerichtet ist, visuelle Markierungen zu erkennen und ihre räumliche Position zu bestimmen, und eine mit der Bildverarbeitungseinheit betriebsmäßig gekoppelte Berechnungseinheit, welche dazu eingerichtet ist, anhand eines Vergleichens einer bestimmten räumlichen Position und einer angestrebten räumlichen Position ein Kalibrieren eines Koordinatensystems eines Flurförderzeugs vorzunehmen.

Hierbei kann das erfindungsgemäße System ferner eine Kommunikationseinheit umfassen, welche dazu eingerichtet ist, mit einer entsprechenden Kommunikationseinheit eines Flurförderzeugs zu kommunizieren. Über den derart gebildeten Kommunikationskanal kann beispielsweise ein Satz von Korrekturfaktoren für ein unkalibriertes Koordinatensystem des Fahrzeugs oder auch unmittelbar ein vollständig kalibriertes Koordinatensystem zu dem Flurförderzeug übertragen werden.

Weiterhin kann das erfindungsgemäße System eine Verwaltungseinheit umfassen, welche dazu eingerichtet ist, Anweisungen hinsichtlich vorbestimmter Bewegungsabläufe und/oder vorbestimmter Zielzustände an ein Flurförderzeug auszugeben und mittels der Kommunikationseinheit zu diesem zu kommunizieren. Somit kann durch das Vorsehen der Verwaltungseinheit in einer koordinierten Weise ein Ablaufplan für die einzelnen Kalibrationsvorgänge schrittweise an die einzelnen Flurförderzeuge übertragen werden.

Weitere Merkmale und Vorteile der vorliegenden Erfindung werden aus der nachfolgenden Beschreibung von Ausführungsformen davon deutlich, wenn diese gemeinsam mit den beiliegenden Figuren betrachtet wird. Diese zeigen im Einzelnen:
Fig. 1: eine schematische Darstellung eines automatisierten Flurförderzeugs beim Durchführen eines Kalibrierungsverfahrens;
Fig. 2: eine schematische Ansicht eines Verfahrensablaufs eines Kalibrierungsverfahrens einer zweiten Ausführungsform; und
Fig. 3: eine schematische Darstellung eines erfindungsgemäßen Systems zum Durchführen derartiger Kalibrierungsverfahren.

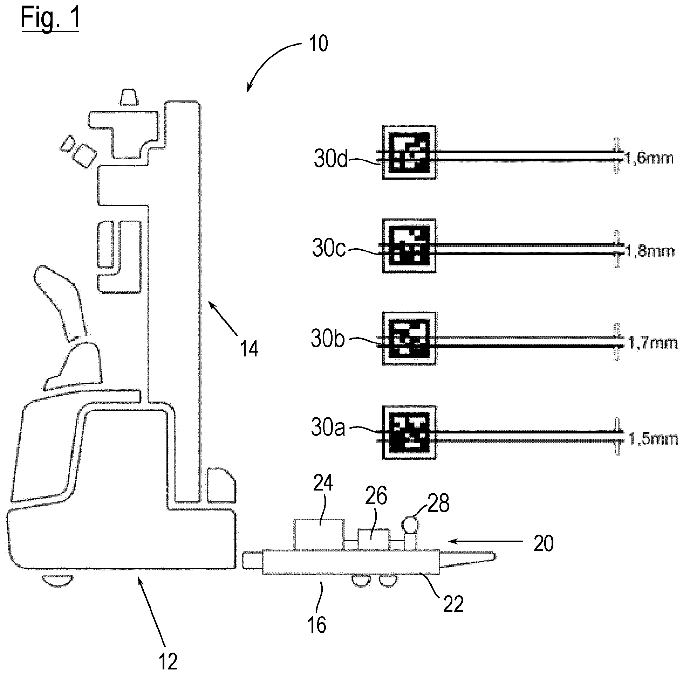

In Figur 1 ist zunächst schematisch ein automatisiertes Flurförderzeug 10 beim Durchführen eines Kalibrierungsverfahrens dargestellt. Dieses Flurförderzeug 10 umfasst einen Fahrzeugkörper 12 sowie einen Hubmast 14, an welchem ein Hubelement 16 vertikal verlagerbar getragen ist.

In der gezeigten Ausführungsform trägt das Hubelement 16 zur Kalibrierung des internen Koordinatensystems 10 einen Kameraaufbau 20 auf einer hierzu geeigneten und angepassten Palette 22, wobei die Kameraanordnung 20 ferner einen Energiespeicher 24, eine Datenverarbeitungseinheit 26 und die eigentliche Kamera 28 umfasst. Hierbei ist die räumliche Ausrichtung der Kamera 28 bezüglich des Hubelements 16 durch den Aufbau auf der Palette 20 festgelegt, wodurch sich durch Auswertung von durch geeignete Sensoren des Flurförderzeugs 10 zur Bestimmung der momentanen Hubhöhe des Hubelements 16 erfassten Daten auch die relative Lage der Kamera 28 zum Fahrzeugkörper 12 ableiten lässt.

Weiterhin sind in Figur 1 insgesamt vier visuelle Markierungen 30a bis 30d angedeutet, welche an einer vertikalen Struktur, wie beispielsweise einer Wand oder an einem Pfeiler in unterschiedlichen Höhen an genau festgelegten Positionen angebracht sind.

Um nun eine Kalibrierung des internen Koordinatensystems des Flurförderzeugs 10 hinsichtlich vertikaler Bewegungen des Hubelements 16 vorzunehmen, bewegt sich das Flurförderzeug 10 zunächst einmal an eine geeignete Position, von welcher aus die Kamera 28 bei einer Anordnung des Hubelements 16 an einer geeigneten vertikalen Position die jeweiligen Markierungen 30a bis 30d einzeln erfassen kann.

Da diese Markierungen 30a bis 30d im gezeigten Ausführungsbeispiel als AprilTags3 ausgeführt sind, eignen sie sich besonders zur automatisierten optischen Erfassung und zur anschließenden Daten-Weiterarbeitung mittels der Datenverarbeitungseinheit 26. Jedoch wäre an dieser Stelle auch die Verwendung anderer Typen von Markierungen oder Tags denkbar, beispielsweise von QR-Codes.

Nach Erreichen der geeigneten Position durch das Flurförderzeug 10 wird nun das Hubelement 16 des Flurförderzeugs 10 auf eine Höhe angehoben, welche gemäß dem internen Koordinatensystem des Flurförderzeugs einer vorbestimmten Ausrichtung der Kamera 28 zu jeweils einer der visuellen Markierungen 30a bis 30d entspricht. Nach einer Aufnahme eines Bilds durch die Kamera 28 von dieser vorhergesagten Position aus kann dann eine Abweichung zwischen der für die Kamera 28 erwarteten Position und der tatsächlich durch Verarbeitung der von den aufgenommenen Kameradaten bestimmten Position durch die Datenverarbeitungseinheit 26 errechnet werden.

Im hier dargestellten Beispiel wird eine solche Bestimmung sequentiell für jede der visuellen Markierungen 30a bis 30d durchgeführt, wobei sich jeweils Abweichungen in der Größenordnung von 1,5 bis 1,8 Millimetern ergeben. Auf Grundlage dieser bestimmten Abweichungen kann anschließend eine Kalibrierung des internen Koordinatensystems des Flurförderzeugs 10 stattfinden, wobei ferner weitere Durchläufe dieses Vorgangs zur weiteren Verbesserung der Präzision des Koordinatensystems oder zur Verifizierung davon durchgeführt werden können. Ferner bietet es sich an, ein solches Verfahren mehrmals hintereinander mit einer unterschiedlichen von dem Hubelement 16 getragenen Last durchzuführen, entweder ebenfalls lediglich um die Kalibrierung zu verifizieren oder um ein höherdimensionales Kennfeld zu kalibrieren, welches als weitere Dimension zusätzlich zu der vertikalen Raumposition auch noch die getragene Last umfasst. Alternativ kann auch eine funktionale Abhängigkeit von der getragenen Last kalibriert werden.

Durch das eben beschriebene Verfahren kann eine Kalibrierung eines oder mehrerer Flurförderzeuge mit minimalem Bedieneraufwand durchgeführt werden, da je nach Fähigkeit des Flurförderzeugs 10 zu einem automatisierten Betrieb einige oder alle der beschriebenen Schritte autonom von dem Fahrzeug 10 durchgeführt werden können, beispielsweise auch das Anfahren der geeigneten Position vor dem vertikalen Objekt, welches die Markierungen 30a bis 30d trägt. In einer Variante der hier gezeigten Ausführungsform könnte/n ferner eine oder mehrere stationäre Kameras vorgesehen sein, wobei in diesem Fall dann die entsprechende wenigstens eine visuelle Markierung dem Hubelement des Flurförderzeugs zuzuordnen wäre.

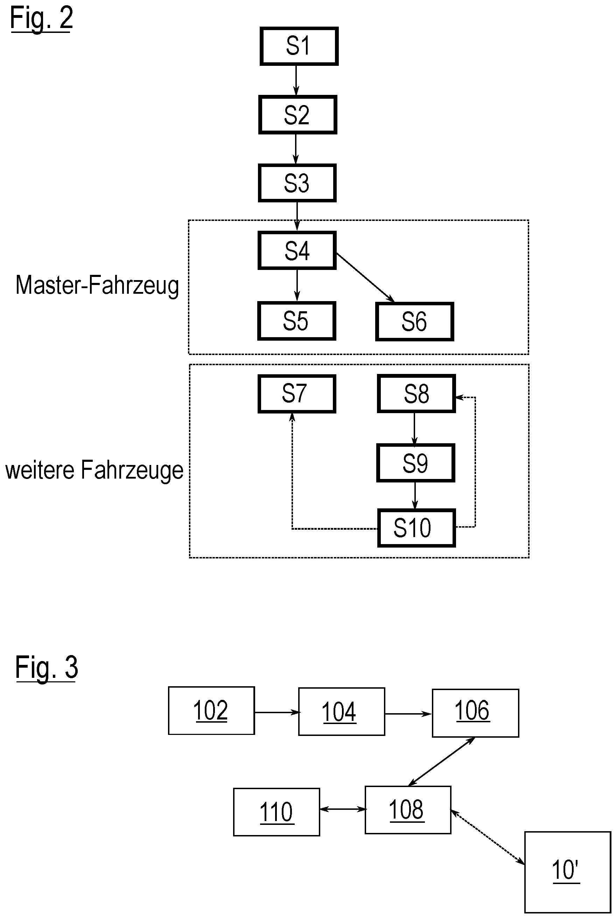

Figur 2 zeigt nun in Form eines Flussdiagramms eine schematische Ansicht eines Verfahrensablaufs eines Kalibrierungsverfahrens einer zweiten Ausführungsform der vorliegenden Erfindung, in welchem zunächst einmal in einem Schritt S1 eine Flotte von automatisierten Flurförderzeugen eines selben Fahrzeugtyps bereitgestellt wird, deren interne Koordinatensysteme jeweils noch nicht in einem Maße kalibriert worden sind, dass die Flurförderzeuge bereits in einem produktiven Betrieb arbeiten könnten.

Wenngleich in dem hier im Zusammenhang mit Figur 2 erläuterten Verfahren eine Flotte von Fahrzeugen eines selben Typs kalibriert wird, so könnten sich die entsprechenden Fahrzeuge jedoch in Varianten hiervon auch unterscheiden, solange sich die für die Kalibration der für entsprechende Arbeitsvorgänge relevanten Komponenten notwendigen Daten eindeutig anhand der Markierungen ableiten lassen.

Anschließend wird aus der Flotte von automatisierten Flurförderzeugen ein einzelnes Master-Fahrzeug bei Schritt S2 ausgewählt. Daraufhin wird sowohl bei dem Master-Fahrzeug als auch bei sämtlichen weiteren Fahrzeugen der Flotte wenigstens eine visuelle Markierung an identischen Positionen des jeweiligen Fahrzeugs im Rahmen eines Schritts S3 angebracht, wobei die Schritte S2 und S3 selbstverständlich auch zeitlich vertauscht vorgenommen werden können..

Ausgehend davon, dass nun sowohl das Master-Fahrzeug, als auch sämtliche weiteren Fahrzeuge der Flotte in gleicher Weise markiert sind, wird nun bei Schritt S4 ein Kalibrieren des internen Koordinatensystems des Master-Fahrzeugs durchgeführt, beispielsweise vollständig oder teilweise manuell durch einen Bediener oder mittels eines automatisierten Verfahrens im Rahmen der hier vorgestellten Technologien.

Das derart kalibrierte Master-Fahrzeug durchläuft nun im Rahmen von Schritt S5 einen vorbestimmten Bewegungsablauf, um über eine kalibrierte Bahnkurve zu einem kalibrierten räumlichen Zielzustand zu gelangen, wobei gleichzeitig in Schritt S6 dieser Bewegungsablauf und insbesondere die visuelle Markierung an dem Master-Fahrzeug durch eine von dem Master-Fahrzeug entfernte optische Kamera aufgenommen wird und hieraus mittels geeigneter Datenverarbeitung eine Master-Bahnkurve und/oder ein Master-Zielzustand bestimmt wird.

Anschließend durchläuft eines der weiteren Fahrzeuge der Flotte in einem unkalibrierten Zustand einen vorbestimmen Bewegungsablauf, um die Master-Bahnkurve nachzubilden und/oder den Master-Zielzustand zu erreichen (Schritt S7). Hierbei wird erneut gleichzeitig in Schritt S8 die wenigstens eine visuelle Markierung an dem weiteren Fahrzeug mittels einer optischen Kamera aufgenommen, um die tatsächliche Bahnkurve des entsprechenden Fahrzeugs und/oder den tatsächlichen räumlichen Zustand des Fahrzeugs zu bestimmen.

Anschließend wird bei Schritt S9 der bestimmte tatsächliche räumliche Zustand des entsprechenden Fahrzeugs mit dem Master-Zielzustand und/oder die tatsächliche Bahnkurve des Fahrzeugs mit der Master-Bahnkurve verglichen, wobei anschließend bei Schritt S10 eine Kalibration des Koordinatensystems des weiteren Fahrzeugs anhand des Ergebnisses des Vergleichs aus Schritt S9 stattfindet.

Nach abgeschlossener Kalibrierung des entsprechenden Fahrzeugs bei Schritt S10, welche beispielsweise ein mehrfaches Durchführen der Schritte S7 bis S10 zum iterativen Verbessern der Kalibration des Fahrzeugs oder zu einer Mittelwertbildung umfassen kann, werden die Schritte S7 bis S10 in analoger Weise nacheinander von sämtlichen weiteren Fahrzeugen der Flotte durchlaufen, um schließlich die gesamte Flotte kalibriert zu haben, wobei jedoch lediglich das Master-Fahrzeug in einer anderen Weise wie die restlichen Fahrzeuge der Flotte kalibriert werden musste, so dass hier durch den erhöhten Automatisierungsgrad ein erheblich geringerer Aufwand betrieben werden musste, als es bei einer manuellen Kalibrierung sämtlicher Fahrzeuge der Flotte notwendig gewesen wäre.

Zuletzt zeigt die Figur 3 noch ein System zum Durchführen eines derartigen Verfahrens in einer schematischen Darstellung, welches ganz allgemein mit dem Bezugszeichen 100 bezeichnet ist, wobei das System wenigstens teilweise durch entsprechende Komponenten aus Figur 1 ausgeführt sein kann.

Dieses System 100 umfasst wenigstens eine optische Kamera 102 sowie eine mit der wenigstens einen optischen Kamera 102 betriebsmäßig gekoppelte Bildverarbeitungseinheit 104, welche dazu eingerichtet ist, die im Rahmen von Figur 1 und Figur 2 angesprochenen visuellen Markierungen an einem Flurförderzeug oder an einer vorbestimmten Position in einer Umgebung des Flurförderzeugs zu bestimmen. Diese Bildverarbeitungseinheit 104 ist ihrerseits betriebsmäßig mit einer Berechnungseinheit 106 gekoppelt, welche dazu eingerichtet ist, anhand eines Vergleichens der bestimmten räumlichen Position der entsprechenden visuellen Markierung mit einer angestrebten räumlichen Position ein Kalibrieren des Koordinatensystems eines Flurförderzeugs 10' vorzunehmen. Hierbei kann das System 100 ferner eine Kommunikationseinheit 108 zur Kommunikation mit dem Flurförderzeug 10' sowie eine Verwaltungseinheit 110 umfassen, welche dazu eingerichtet ist, Anweisungen hinsichtlich vorbestimmter Bewegungsabläufe und/oder vorbestimmter Zielzustände an das Flurförderzeug 10' auszugeben und mittels der Kommunikationseinheit 108 zu diesem zu kommunizieren.

Wie sich aus den Figuren 1 und 2 und den darin vorgestellten Kalibrationsverfahren ergibt, kann hierbei das System aus Figur 3 ganz oder teilweise dem Flurförderzeug 10' zugeordnet sein, insbesondere in Ausführungsformen ähnlich derjenigen aus Figur 1, während in Ausführungsformen zum Durchführen eines Verfahrens gemäß Figur 2 auch sämtliche Komponenten des Systems 100 entfernt von dem Flurförderzeug 10' vorgesehen sein können.

## Patentansprüche

1. Verfahren zum Kalibrieren eines jeweiligen Koordinatensystems einer Flotte von automatisierten Flurförderzeugen mit unkalibrierten Koordinatensystemen, umfassend die folgenden Schritte:
- Definieren eines Master-Fahrzeugs aus der Flotte (S2);
- Versehen des Master-Fahrzeugs und aller weiterer Fahrzeuge der Flotte mit wenigstens einer visuellen Markierung an den Fahrzeugen (S3);
- Durchführen eines Kalibrierens des Koordinatensystems des Master-Fahrzeugs (S4);
- Durchlaufen eines vorbestimmten Bewegungsablaufs durch das kalibrierte Master-Fahrzeug, um über eine kalibrierte Bahnkurve zu einem kalibrierten räumlichen Zielzustand zu gelangen (S5);
- Aufnehmen der wenigstens einen visuellen Markierung an dem Master-Fahrzeug mittels einer von dem Master-Fahrzeug entfernten optischen Kamera zum Bestimmen einer Master-Bahnkurve und/oder eines Master-Zielzustands (S6); und
- für jedes der weiteren Fahrzeuge der Flotte:
∘ Durchlaufen eines vorbestimmten Bewegungsablaufs anhand des entsprechenden unkalibrierten Koordinatensystems, um die Master-Bahnkurve nachzubilden und/oder den Master-Zielzustand zu erreichen (S7);
∘ Aufnehmen der wenigstens einen visuellen Markierung an dem weiteren Fahrzeug mittels einer optischen Kamera, um die tatsächliche Bahnkurve und/oder den tatsächlichen räumlichen Zustand des Fahrzeugs zu bestimmen (S8);
∘ Vergleichen des bestimmten tatsächlichen räumlichen Zustands des Fahrzeugs mit dem Master-Zielzustand und/oder der tatsächlichen Bahnkurve mit der Master-Bahnkurve (S9); und
∘ Kalibrieren des Koordinatensystems des Fahrzeugs anhand des Ergebnisses dieses Vergleichs (S10).

2. Verfahren nach Anspruch 1,
wobei wenigstens einige der Fahrzeuge der Flotte von einem selben Fahrzeugtyp sind und die visuellen Markierungen an identischen Positionen daran bereitgestellt werden.

3. Verfahren nach Anspruch 1 oder 2,
wobei das Kalibrieren der weiteren Fahrzeuge der Flotte das Berechnen eines Korrekturvektors umfasst.

4. Verfahren nach einem der Ansprüche 1 bis 3,
wobei das jeweilige Kalibrieren des Koordinatensystems der weiteren Fahrzeuge der Flotte mehrfaches Durchlaufen eines vorbestimmten Bewegungsablaufs und ein mehrfaches Aufnehmen der wenigstens einen visuellen Markierung sowie ein iteratives Kalibrieren anhand jeweiliger aufeinander folgender Vergleiche und/oder eine, ggf. gewichtete, Mittelwertbildung zwischen den jeweiligen aufeinander folgenden Vergleichen umfasst.

5. Verfahren nach einem der Ansprüche 1 bis 4,
wobei das Kalibrieren des Koordinatensystems des Master-Fahrzeugs mittels eines Verfahrens zum Kalibrieren eines Koordinatensystems eines Flurförderzeugs (10) durchgeführt wird, umfassend die folgenden Schritte:
- Bereitstellen eines unkalibrierten Koordinatensystems für das Flurförderzeug (10);
- Versehen des Flurförderzeugs mit einer visuellen Markierung an einer vorbestimmten Position und Positionieren einer optischen Kamera an einer vorbestimmten Kameraposition außerhalb des Flurförderzeugs; oder
- Anbringen einer visuellen Markierung (30a - 30d) an einer vorbestimmten festen Raumposition außerhalb des Flurförderzeugs (10) und Positionieren einer optischen Kamera (28) an einer vorbestimmten Kameraposition an dem Flurförderzeug (10);
- Durchlaufen eines vorbestimmten Bewegungsablaufs durch das Flurförderzeug (10), um über eine angestrebte Bahnkurve zu einem angestrebten räumlichen Zielzustand zu gelangen, anhand des unkalibrierten Koordinatensystems;
- Aufnehmen der visuellen Markierung an dem Flurförderzeug mittels der von dem Flurförderzeug entfernten optischen Kamera oder Aufnehmen der außerhalb des Flurförderzeugs (10) angeordneten visuellen Markierung (30a - 30d) mittels der an dem Flurförderzeug (10) angeordneten optischen Kamera (28), um die tatsächliche Bahnkurve und/oder den tatsächlichen räumlichen Zustand des Flurförderzeugs (10) zu bestimmen;
- Vergleichen des bestimmten tatsächlichen räumlichen Zustands des Flurförderzeugs (10) mit dem angestrebten räumlichen Zielzustand und/oder der bestimmten Bahnkurve mit der angestrebten Bahnkurve; und
- Kalibrieren des Koordinatensystems des Flurförderzeugs (10) anhand des Ergebnisses dieses Vergleichs,
vorzugsweise ferner umfassend:
- ein aufeinanderfolgendes Anfahren einer Mehrzahl von angestrebten räumlichen Zielzuständen durch das Flurförderzeug (10) oder ein mehrmaliges Anfahren desselben räumlichen Zielzustands;
- ein jeweiliges Bestimmen des tatsächlichen räumlichen Zustands des Flurförderzeugs (10) mittels der optischen Kamera (28);
- ein jeweiliges Vergleichen des bestimmten tatsächlichen räumlichen Zielzustands des Flurförderzeugs (10) mit dem angestrebten räumlichen Zielzustand; und
- ein Kalibrieren des Koordinatensystems des Flurförderzeugs (10) anhand der Ergebnisse der Vergleiche,
wobei weiter vorzugsweise das Kalibrieren des Koordinatensystems ein iteratives Kalibrieren anhand der jeweiligen aufeinander folgenden Vergleiche und/oder eine, ggf. gewichtete, Mittelwertbildung zwischen den jeweiligen aufeinander folgenden Vergleichen umfasst.

6. Verfahren nach einem der Ansprüche 1 bis 4,
wobei das Kalibrieren des Koordinatensystems des Master-Fahrzeugs ein Fahren zu einem angestrebten räumlichen Zielzustand anhand des unkalibrierten Koordinatensystems sowie ein Vermessen des tatsächlich erreichten Zielzustands und ein Vergleichen des tatsächlich erreichten Zielzustands mit dem angestrebten räumlichen Zielzustand umfasst.

7. Verfahren nach einem der Ansprüche 1 bis 6,
wobei das Kalibrieren des Koordinatensystems des Master-Fahrzeugs ein Vergleichen von Eigenschaften von Komponenten des Master-Fahrzeugs mit kalibrierten Referenzkomponenten umfasst und/oder wobei das Kalibrieren der Koordinatensysteme der weiteren Fahrzeuge der Flotte ein Vergleichen von Eigenschaften von Komponenten des entsprechenden Fahrzeugs mit Masterkomponenten des Master-Fahrzeugs umfasst.

8. System (100) zum Durchführen eines Verfahrens nach einem der vorhergehenden Ansprüche, umfassend:
- wenigstens eine optische Kamera (102);
- eine mit der wenigstens einen optischen Kamera (102) betriebsmäßig gekoppelte Bildverarbeitungseinheit (104), welche dazu eingerichtet ist, visuelle Markierungen zu erkennen und ihre räumliche Position zu bestimmen; und
- eine mit der Bildverarbeitungseinheit (104) betriebsmäßig gekoppelte Berechnungseinheit (106), welche dazu eingerichtet ist, anhand eines Vergleichens einer bestimmten räumlichen Position und einer angestrebten räumlichen Position ein Kalibrieren eines Koordinatensystems eines Flurförderzeugs vorzunehmen.

9. System nach Anspruch 8,
ferner umfassend eine Kommunikationseinheit (108), welche dazu eingerichtet ist, mit einer entsprechenden Kommunikationseinheit eines Flurförderzeugs zu kommunizieren.

10. System nach Anspruch 9,
ferner umfassend eine Verwaltungseinheit (110), welche dazu eingerichtet ist, Anweisungen hinsichtlich vorbestimmter Bewegungsabläufe und/oder vorbestimmter Zielzustände an ein Flurförderzeug auszugeben und mittels der Kommunikationseinheit (108) zu diesem zu kommunizieren.

## Claims

1. Method for calibrating a respective coordinate system of a fleet of automated industrial trucks with uncalibrated coordinate systems, comprising the following steps:
- Defining a master truck from the fleet (S2)
- Providing the master truck and all further trucks of the fleet with at least one visual marking on the trucks (S3)
- Performing a calibration of the coordinate system of the master truck (S4)
- Having the calibrated master truck run through a predetermined sequence of movements in order to reach a calibrated spatial target state via a calibrated trajectory (S5)
- Capturing the at least one visual marking on the master truck by means of an optical camera remote from the master truck in order to determine a master trajectory and/or a master target state (S6), and
- for each further truck of the fleet:
∘ Running through a predetermined sequence of movements based on the corresponding uncalibrated coordinate system in order to replicate the master trajectory and/or reach the master target state (S7)
∘ Capturing the at least one visual marking on the further truck by means of an optical camera in order to determine the actual trajectory and/or the actual spatial state of the truck (S8)
∘ Comparing the determined actual spatial state of the truck with the master target state and/or the actual trajectory with the master trajectory (S9), and
∘ Calibrating the truck's coordinate system based on the result of this comparison (S10).

2. Method according to claim 1,
wherein at least some of the trucks of the fleet are of the same truck type and the visual markings are provided at identical positions thereon.

3. Method according to claim 1 or 2,
wherein the calibration of the further trucks of the fleet includes the calculation of a correction vector.

4. Method according to any of claims 1 to 3,
wherein the respective calibration of the coordinate system of the further trucks of the fleet involves repeatedly running through a predetermined sequence of movements, repeatedly capturing the at least one visual marking and performing an iterative calibration based on respective successive comparisons and/or calculating a, possibly weighted, average between the respective successive comparisons.

5. Method according to any of claims 1 to 4,
wherein the calibration of the coordinate system of the master truck is carried out by means of a method for calibrating a coordinate system of an industrial truck (10), comprising the following steps:
- Providing an uncalibrated coordinate system for the industrial truck (10)
- Providing the industrial truck with a visual marking at a predetermined position and positioning an optical camera at a predetermined camera position outside the industrial truck, or
- Affixing a visual marking (30a - 30d) at a predetermined fixed spatial position outside the industrial truck (10) and positioning an optical camera (28) at a predetermined camera position on the industrial truck (10)
- Having the industrial truck (10) run through a predetermined sequence of movements in order to reach a desired spatial target state via a desired trajectory based on the uncalibrated coordinate system
- Capturing the visual marking on the industrial truck by means of the optical camera remote from the industrial truck or capturing the visual marking (30a - 30d) arranged outside the industrial truck (10) by means of the optical camera (28) arranged on the industrial truck (10) in order to determine the actual trajectory and/or the actual spatial state of the industrial truck (10)
- Comparing the determined actual spatial state of the industrial truck (10) with the desired spatial target state and/or the determined trajectory with the desired trajectory, and
- Calibrating the coordinate system of the industrial truck (10) based on the result of this comparison,
preferably further comprising:
- Having the industrial truck (10) travel successively to a plurality of desired spatial target states or repeatedly travel to the same spatial target state
- Respectively determining the actual spatial state of the industrial truck (10) by means of the optical camera (28)
- Respectively comparing the determined actual spatial target state of the industrial truck (10) with the desired spatial target state, and
- Calibrating the coordinate system of the industrial truck (10) based on the results of the comparisons,
wherein further preferably the calibration of the coordinate system involves performing an iterative calibration based on respective successive comparisons and/or calculating a, possibly weighted, average between the respective successive comparisons.

6. Method according to any of claims 1 to 4,
wherein the calibration of the coordinate system of the master truck involves travelling to a desired spatial target state based on the uncalibrated coordinate system, measuring the target state actually reached and comparing the target state actually reached with the desired spatial target state.

7. Method according to any of claims 1 to 6,
wherein the calibration of the coordinate system of the master truck involves comparing properties of components of the master truck with calibrated reference components and/or wherein the calibration of the coordinate systems of the further trucks of the fleet involves comparing properties of components of the corresponding truck with master components of the master truck.

8. System (100) for carrying out a method according to any of the preceding claims, comprising:
- at least one optical camera (102)
- an image processing unit (104) which is operationally coupled to the at least one optical camera (102) and adapted to recognise visual markings and determine their spatial position, and
- a calculation unit (106) which is operationally coupled to the image processing unit (104) and which is adapted to calibrate a coordinate system of an industrial truck based on a comparison of a certain spatial position and a desired spatial position.

9. System according to claim 8,
further comprising a communication unit (108) which is adapted to communicate with a corresponding communication unit of an industrial truck.

10. System according to claim 9,
further comprising a management unit (110) which is adapted to issue instructions regarding predetermined sequences of movements and/or predetermined target states to an industrial truck and to communicate with it via the communication unit (108).

## Revendications

1. Procédé d'étalonnage d'un système de coordonnées respectif d'une flotte de chariots de manutention automatisés ayant des systèmes de coordonnées non étalonnés, comprenant les étapes suivantes consistant à :
- définir un véhicule maître parmi la flotte (S2) ;
- équiper le véhicule maître et tous les autres véhicules de la flotte d'au moins un repère visuel sur les véhicules (S3) ;
- effectuer un étalonnage du système de coordonnées du véhicule maître (S4) ;
- faire suivre au véhicule maître étalonné une séquence de mouvements prédéterminée pour atteindre un état spatial cible étalonné en suivant une trajectoire étalonnée (S5) ;
- enregistrer ledit au moins un repère visuel sur le véhicule maître au moyen d'une caméra optique éloignée du véhicule maître pour déterminer une trajectoire maître et/ou un état cible maître (S6) ; et
- pour chacun des autres véhicules de la flotte :
∘ effectuer une séquence de mouvements prédéterminée à l'aide du système de coordonnées non étalonné correspondant pour reproduire la trajectoire maître et/ou pour atteindre l'état cible maître (S7) ;
∘ enregistrer ledit au moins un repère visuel sur l'autre véhicule au moyen d'une caméra optique pour déterminer la trajectoire réelle et/ou l'état spatial réel du véhicule (S8) ;
∘ comparer l'état spatial réel déterminé du véhicule avec l'état cible maître et/ou comparer la trajectoire réelle avec la trajectoire maître (S9) ; et
∘ étalonner le système de coordonnées du véhicule en fonction du résultat de cette comparaison (S10).

2. Procédé selon la revendication 1,
dans lequel au moins certains des véhicules de la flotte sont d'un même type de véhicule, et les repères visuels sont fournis à des positions identiques sur ceux-ci.

3. Procédé selon la revendication 1 ou 2,
dans lequel l'étalonnage des autres véhicules de la flotte comprend le calcul d'un vecteur de correction.

4. Procédé selon l'une des revendications 1 à 3,
dans lequel l'étalonnage respectif du système de coordonnées des autres véhicules de la flotte comprend un passage multiple par une séquence de mouvements prédéterminée et un enregistrement multiple dudit au moins un repère visuel ainsi qu'un étalonnage itératif à l'aide de comparaisons successives respectives et/ou un calcul de la valeur moyenne, éventuellement pondérée, entre les comparaisons successives respectives.

5. Procédé selon l'une des revendications 1 à 4,
dans lequel l'étalonnage du système de coordonnées du véhicule maître est réalisé par un procédé d'étalonnage d'un système de coordonnées d'un chariot de manutention (10), comprenant les étapes suivantes consistant à :
- fournir un système de coordonnées non étalonné pour le chariot de manutention (10) ;
- équiper le chariot de manutention d'un repère visuel à une position prédéterminée et positionner une caméra optique à une position de caméra prédéterminée à l'extérieur du chariot de manutention ; ou
- placer un repère visuel (30a - 30d) à une position spatiale fixe prédéterminée à l'extérieur du chariot de manutention (10) et positionner une caméra optique (28) à une position de caméra prédéterminée sur le chariot de manutention (10) ;
- faire suivre au chariot de manutention (10) une séquence de mouvements prédéterminée pour atteindre un état spatial cible visé en suivant une trajectoire visée, à l'aide du système de coordonnées non étalonné ;
- enregistrer le repère visuel sur le chariot de manutention au moyen de la caméra optique éloignée du chariot de manutention ou enregistrer le repère visuel (30a - 30d) placé à l'extérieur du chariot de manutention (10) au moyen de la caméra optique (28) située sur le chariot de manutention (10), afin de déterminer la trajectoire réelle et/ou l'état spatial réel du chariot de manutention (10) ;
- comparer l'état spatial réel déterminé du chariot de manutention (10) avec l'état spatial cible visé et/ou comparer la trajectoire déterminée avec la trajectoire visée ; et
- étalonner le système de coordonnées du chariot de manutention (10) en fonction du résultat de cette comparaison,
comprenant de préférence en outre :
- une approche successive d'une pluralité d'états spatiaux cibles visés par le chariot de manutention (10) ou une approche répétée du même état spatial cible ;
- une détermination respective de l'état spatial réel du chariot de manutention (10) au moyen de la caméra optique (28) ;
- une comparaison respective de l'état spatial cible réel déterminé du chariot de manutention (10) avec l'état spatial cible visé ; et
- un étalonnage du système de coordonnées du chariot de manutention (10) en fonction des résultats des comparaisons,
de préférence encore, l'étalonnage du système de coordonnées comprenant un étalonnage itératif à l'aide des comparaisons successives respectives et/ou d'un calcul de la valeur moyenne, éventuellement pondérée, entre les comparaisons successives respectives.

6. Procédé selon l'une des revendications 1 à 4,
dans lequel l'étalonnage du système de coordonnées du véhicule maître comprend un déplacement vers un état spatial cible visé à l'aide du système de coordonnées non étalonné, ainsi qu'un mesurage de l'état cible réellement atteint et une comparaison de l'état cible réellement atteint avec l'état spatial cible visé.

7. Procédé selon l'une des revendications 1 à 6,
dans lequel l'étalonnage du système de coordonnées du véhicule maître comprend une comparaison de propriétés de composants du véhicule maître avec des composants de référence étalonnés, et/ou l'étalonnage des systèmes de coordonnées des autres véhicules de la flotte comprend une comparaison de propriétés de composants du véhicule correspondant avec des composants maîtres du véhicule maître.

8. Système (100) de mise en œuvre d'un procédé selon l'une des revendications précédentes, comprenant :
- au moins une caméra optique (102) ;
- une unité de traitement d'images (104) couplée de manière opérationnelle à ladite au moins une caméra optique (102), qui est adaptée pour détecter des repères visuels et pour déterminer leur position spatiale ; et
- une unité de calcul (106) couplée de manière opérationnelle à l'unité de traitement d'images (104), qui est adaptée pour effectuer un étalonnage d'un système de coordonnées d'un chariot de manutention à l'aide d'une comparaison entre une position spatiale déterminée et une position spatiale visée.

9. Système selon la revendication 8,
comprenant en outre une unité de communication (108) adaptée pour communiquer avec une unité de communication correspondante d'un chariot de manutention.

10. Système selon la revendication 9,
comprenant en outre une unité de gestion (110) adaptée pour émettre à un chariot de manutention des instructions concernant des séquences de mouvements prédéterminées et/ou des états cibles prédéterminés et pour communiquer avec ledit chariot de manutention au moyen de l'unité de communication (108).
